# EUROPEAN PATENT SPECIFICATION

(11) **EP 3 170 855 B1**
(45) Date of publication and mention of the grant of the patent: **09.06.2021**
(21) Application number: 15835779.8
(22) Date of filing: 24.08.2015
(51) Int. Cl.: C08G 75/20, C08L 81/06, C08J 5/00, C08G 65/00, C08G 75/23, C08J 5/06

(54) **POLYSULFONE COPOLYMER WITH EXCELLENT HEAT RESISTANCE AND CHEMICAL RESISTANCE, AND METHOD FOR PREPARING SAME**
POLYSULFON-COPOLYMER MIT AUSGEZEICHNETER HITZEBESTÄNDIGKEIT UND CHEMISCHER BESTÄNDIGKEIT SOWIE VERFAHREN ZUR HERSTELLUNG DAVON
COPOLYMÈRE DE POLYSULFONE PRÉSENTANT UNE EXCELLENTE RÉSISTANCE À LA CHALEUR ET UNE EXCELLENTE RÉSISTANCE CHIMIQUE ET PROCÉDÉ POUR SA PRÉPARATION

(30) Priority: 25.08.2014 KR 20140110991; 03.06.2015 KR 20150078373
(43) Date of publication of application: 24.05.2017
(73) Proprietor: Samyang Corporation, Seoul 110-725 (KR)
(72) Inventor: LIM, Jong Kwan, Cheongju-si Chungcheongbuk-do 28567 (KR); ROH, Hyung Jin, Daejeon 34022 (KR); HEO, Seong Hyen, Busan 46703 (KR)
(74) Representative: Eder, Michael
(86) International application number: PCT/KR2015/008808
(87) International publication number: WO 2016/032179

(56) References cited:
- WO-A2-2014/072473
- JP-A- 2011 127 108
- JP-A- 2012 166 503
- JP-A- 2014 040 517
- KR-A- 19990 072 675
- KR-A- 20140 100 301
- HANS R. KRICHELDORF ET AL: "New polymer syntheses. LXXXII. Syntheses of poly(ether-sulfone)s from silylated aliphatic diols including chiral monomers", JOURNAL OF POLYMER SCIENCE PART A: POLYMER CHEMISTRY, vol. 33, no. 15, 15 November 1995 (1995-11-15), pages 2667-2671, XP055053356, ISSN: 0887-624X, DOI: 10.1002/pola.1995.080331513
- SABER CHATTI ET AL: "Poly(ether sulfone) of Isosorbide, Isomannide and Isoidide", HIGH PERFORMANCE POLYMERS, INSTITUTE OF PHYSICS PUBLISHING, BRISTOL, GB, vol. 21, no. 1, 1 February 2009 (2009-02-01), pages 105-118, XP008151327, ISSN: 0954-0083, DOI: 10.1177/0954008308088296
- FENOUILLOT F ET AL: "Polymers from renewable 1,4:3,6-dianhydrohexitols (isosorbide, isomannide and isoidide): A review", PROGRESS IN POLYMER SCIENCE, PERGAMON PRESS, OXFORD, GB, vol. 35, no. 5, 1 May 2010 (2010-05-01), pages 578-622, XP026983357, ISSN: 0079-6700 [retrieved on 2009-10-30]

## Description

### [TECHNICAL FIELD]

The present invention relates to a polysulfone copolymer having excellent chemical resistance and heat resistance and a method for preparing the same, and more specifically, a polysulfone copolymer which comprises sulfone-based compound and anhydrosugar alcohol which is a biogenic material as repeat units, and thus can solve the problem of exhaustion of petroleum resources which are limited resources; does not emit carbon dioxide when disposed after use, and thus is environmentally friendly; and has significantly improved heat resistance and chemical resistance as compared with conventional polysulfone copolymers; and a method for preparing the same.

### [BACKGROUND ART]

Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the carbon number, hydrogenated sugar is classified into tetritol, pentitol, hexitol and heptitol (4, 5, 6 and 7 carbons, respectively). Among them, hexitol having 6 carbons includes sorbitol, mannitol, iditol, galactitol, etc. and in particular, sorbitol and mannitol are very useful materials.

Anhydrosugar alcohol has a diol form with two hydroxyl groups in the molecule, and can be produced by using hexitol derived from starch (for example, Korean Patent No. 10-1079518 and Korean Laid-open Patent Publication No. 10-2012-0066904). Because anhydrosugar alcohol is an environmentally friendly material derived from recyclable natural resources, it has received much interest for a long time and researches on its production continue to proceed. Among such anhydrosugar alcohols, isosorbide produced from sorbitol has the widest industrial applicability at present.

Anhydrosugar alcohol can be used in various fields including treatment of heart and blood vessel diseases, patch adhesive, medicaments such as mouthwash etc., solvents for compositions in the cosmetics industry, emulsifiers in the food industry, etc. In addition, it can increase the glass transition temperature of polymer materials like polyester, PET, polycarbonate, polyurethane, epoxy resin, etc., and improve the strength of such materials. Furthermore, because anhydrosugar alcohol is an environmentally friendly material derived from natural resources, it is very useful in the plastics industry such as bioplastics and the like. It is also known that anhydrosugar alcohol can be used as an adhesive, environmentally friendly plasticizer, biodegradable polymer, and environmentally friendly solvent for watersoluble lacquer.

As such, anhydrosugar alcohol is receiving much interest because of its wide applicability, and the level of practical industrial application thereof is increasing.

Polysulfone is one of the compounds which are effectively used as substances for electric insulation materials requiring heat resistance, various molding materials requiring dimensional stability/chemical resistance, and membranes. Polysulfone is generally produced by using raw materials derived from petroleum resources. However, because of the concern about exhaustion of the limited petroleum resources, it is required to provide polysulfone using raw materials obtained from biomass resources such as plants, etc. In addition, from the viewpoint of concern about climate change caused by global warming due to increase of emitted amount of carbon dioxide and accumulation thereof, it is required to develop polysulfone using plant-derived, carbon-neutral monomers as raw materials, in order not to emit carbon dioxide when disposed after use.

For instance, Korean Laid-open Patent Publication No. 10-2014-0054765 discloses a microfilter membrane comprising a polysulfone-based polymer, and a method for preparing the same. More concretely, it discloses that if a polysulfone-based polymer is used for preparing a microfilter membrane or an ultrafilter membrane, it is possible to obtain filter membranes having pores with suitably controlled shape and size on its surface or inside thereof. However, since the polysulfone-based polymer in this prior art is synthesized without using other alternative materials, it cannot suggest a solution to the recently issued environmental problem.

Kricheldorf, H.R. et al. (1995), New polymer syntheses. LXXXII. Syntheses of poly(ether-sulfone)s from silylated aliphatic diols including chiral monomers. J. Polym. Sci. A Polym. Chem., 33: 2667-2671 discloses the synthesis of opoly(ether-sulfone)s from aliphatic diols or bissilylated diols, and 4,4'-dichlorodiphenylsulfone or 4,4'-difluorodiphenylsulfone.

Chatti, S. et al. (2009), Poly(ether sulfone) of Isosorbide, Isomannide and Isoidide. High Performance Polymers, 21(1), 105-118 discloses the preparation of three polyether sulfones by polycondensation of 4,4'-difluorodiphenyl-sulfone and 1,6-dianhydrosorbitol (isosorbide), 1,6-dianhydromannitol (isomannide) or 1,6-dianhydroiditol (isoidide) in dimethyl sulfoxide (DMSO).

WO 2014/072473 A2 discloses a process for the manufacturing of a poly(arylether sulfone) polymer.

Fenouillot, F. et al. (2010), Polymers from renewable 1,4:3,6-dianhydrohexitols (isosorbide, isomannide and isoidide): A review, Progress in Polymer Science, 35(5), 578-622 discloses the use of 1,4:3,6-dianhydrohexitols, isosorbide, isomannide and isoidide in polymers.

Accordingly, it is required to provide a polysulfone copolymer which comprises an alternative material, and thus can solve the problem of exhaustion of resources; does not emit carbon dioxide when disposed after use, and thus is environmentally friendly; and has improved heat resistance and chemical resistance.

### [CONTENTS OF THE INVENTION]

### [TECHNICAL PURPOSE]

To resolve the problems of prior arts as explained above, the present invention has an object of providing a polysulfone copolymer which comprises sulfone-based compound and anhydrosugar alcohol which is a biogenic material as repeat units, and thus can solve the problem of exhaustion of petroleum resources which are limited resources; does not emit carbon dioxide when disposed after use, and thus is environmentally friendly; and has significantly improved heat resistance and chemical resistance as compared with conventional polysulfone copolymers; and a method for preparing the same.

### [TECHNICAL MEANS]

To achieve the above-stated object, the present invention provides a polysulfone copolymer comprising repeat units derived from a diol component comprising an anhydrosugar alcohol and a diol compound other than the anhydrosugar alcohol; and repeat units derived from a dihalogenated sulfone compound;
wherein the diol component comprises, based on 100 mol% of the total diol component, 5 to 80 mol% of the anhydrosugar alcohol, and 95 to 20 mol% of the diol compound other than the anhydrosugar alcohol; wherein the diol compound other than the anhydrosugar alcohol is aromatic diol, alicyclic diol, aliphatic diol or mixture thereof; and wherein the aromatic diol is selected from the group consisting of 4,4'-dihydroxy-diphenyl sulfone, 4,4'-biphenol, hydroquinone, 4,4'-dihydroxy-diphenylether, 3-(4-hydroxyphenoxy)phenol, bis(4-hydroxyphenyl)sulfide and combinations thereof, the alicyclic diol is selected from the group consisting of 1,4-cyclohexanedimethanol, 1,3-cyclohexanedimethanol, 1,2-cyclohexanedimethanol, tricyclodecanedimethanol, adamantanediol, pentacyclopentadecanedimethanol and combinations thereof, and the aliphatic diol is selected from the group consisting of ethyleneglycol, 1,3-propanediol, 1,2-propanediol, 1,4-butanediol, 1,3-butanediol, 1,2-butanediol, 1,5-heptanediol, 1,6-hexanediol, and combinations thereof.

The other aspect of the present invention provides a method for preparing a polysulfone copolymer, comprising the steps of:
(1) polymerizing a diol component comprising an anhydrosugar alcohol and a diol compound other than the anhydrosugar alcohol, and a dihalogenated sulfone compound in the presence of alkali metal salt catalyst; wherein the diol component comprises, based on 100 mol% of the total diol component, 5 to 80 mol% of the anhydrosugar alcohol, and 95 to 20 mol% of the diol compound other than the anhydrosugar alcohol; wherein the diol compound other than the anhydrosugar alcohol is aromatic diol, alicyclic diol, aliphatic diol or mixture thereof; and whereinthe aromatic diol is selected from the group consisting of 4,4'-dihydroxy-diphenyl sulfone, 4,4'-biphenol, hydroquinone, 4,4'-dihydroxy-diphenylether, 3-(4-hydroxyphenoxy)phenol, bis(4-hydroxyphenyl)sulfide and combinations thereof,
   the alicyclic diol is selected from the group consisting of 1,4-cyclohexanedimethanol, 1,3-cyclohexanedimethanol, 1,2-cyclohexanedimethanol, tricyclodecanedimethanol, adamantanediol, pentacyclopentadecanedimethanol and combinations thereof, and
   the aliphatic diol is selected from the group consisting of ethyleneglycol, 1,3-propanediol, 1,2-propanediol, 1,4-butanediol, 1,3-butanediol, 1,2-butanediol, 1,5-heptanediol, 1,6-hexanediol, and combinations thereof;
(2) diluting the polymerization reaction product and removing the halogenated product of alkali metal therefrom; and
(3) precipitating the diluted polymerization reaction product and washing it.

Another aspect of the present invention provides a molded product manufactured by using the polysulfone copolymer of the present invention.

### [EFFECT OF THE INVENTION]

The polysulfone copolymer according to the present invention comprises sulfone-based compound and anhydrosugar alcohol which is a biogenic material as repeat units, and thus can solve the problem of exhaustion of petroleum resources which are limited resources; does not emit carbon dioxide when disposed after use, and thus is environmentally friendly; and has significantly improved heat resistance and chemical resistance as compared with conventional polysulfone copolymers, and thus can be used very suitably for resin processed articles such as membranes, etc.

### [CONCRETE EXPLANATION TO CARRY OUT THE INVENTION]

The present invention is explained in more detail below.

The polysulfone copolymer of the present invention comprises: repeat units derived from diol component comprising anhydrosugar alcohol and a diol compound other than the anhydrosugar alcohol; and repeat units derived from dihalogenated sulfone compound.

The anhydrosugar alcohol means any material that is obtained by removing one or more water molecules from a compound, referred to as "hydrogenated sugar" or "sugar alcohol," obtained by adding hydrogen to the reductive end group in sugar.

In the present invention, as the anhydrosugar alcohol, dianhydrohexitol-which is the dehydrated product of hexitol-can be preferably used, and more preferably, the anhydrosugar alcohol can be selected from the group consisting of isosorbide (1,6-dianhydrosorbitol), isomannide (1,6-dianhydromannitol), isoidide (1,6-dianhydroiditol) and mixtures thereof.

In the present invention, the diol component used in preparing the polysulfone copolymer further comprises a diol compound other than the anhydrosugar alcohol selected from aromatic diol, alicyclic diol, aliphatic diol and mixtures thereof, preferably aromatic diol.

The aromatic diol is selected from the group consisting of 4,4'-dihydroxy-diphenyl sulfone, 4,4'-biphenol, hydroquinone, 4,4'-dihydroxy-diphenylether, 3-(4-hydroxyphenoxy)phenol, bis(4-hydroxyphenyl)sulfide and combinations thereof.

The alicyclic diol is selected from the group consisting of 1,4-cyclohexanedimethanol, 1,3-cyclohexanedimethanol, 1,2-cyclohexanedimethanol, tricyclodecanedimethanol, adamantanediol, pentacyclopentadecanedimethanol and combinations thereof.

The aliphatic diol is selected from the group consisting of ethyleneglycol, 1,3-propanediol, 1,2-propanediol, 1,4-butanediol, 1,3-butanediol, 1,2-butanediol, 1,5-heptanediol, 1,6-hexanediol, and combinations thereof.

Alicyclic diol compounds comprising a 5-membered ring structure or a 6-membered ring structure disclosed herein may include an alicyclic diol compound represented by the following formula 1 or 2:

[Formula 1] **HOCH₂-R¹-CH₂OH**

[Formula 2] **HO-R²-OH**

In the above formulas 1 and 2, each of R¹ and R² independently represents a cycloalkyl group having 4 to 20 carbons, or a cycloalkoxy group having 6 to 20 carbons.

The diol component used in preparing the polysulfone copolymer may comprise, based on 100 mol% of the total diol component, preferably 0.1 to 99 mol% of the anhydrosugar alcohol, and 1 to 99.9 mol% of the diol compound other than the anhydrosugar alcohol (for example, aromatic diol, alicyclic diol and/or aliphatic diol); more preferably 1 to 90 mol% of the anhydrosugar alcohol, and 10 to 99 mol% of the diol compound other than the anhydrosugar alcohol; and still more preferably 5 to 80 mol% of the anhydrosugar alcohol, and 20 to 95 mol% of the diol compound other than the anhydrosugar alcohol. If the amount of the anhydrosugar alcohol in the total diol component is less than 0.1 mol% (i.e., if the the amount of the diol compound other than the anhydrosugar alcohol is greater than 99.9 mol%), there is little effect of improving heat resistance and chemical resistance of sulfone-based resin. If the amount of the anhydrosugar alcohol in the total diol component is greater than 99 mol%, it may be difficult to obtain the desired molecular weight.

In the present invention, as the dihalogenated sulfone compound used in preparing the polysulfone copolymer, dihalogenated diaryl sulfone may be used preferably. More specifically, the dihalogenated diaryl sulfone may be selected preferably from the group consisting of 4,4'-dichlorodiphenylsulfone, 4,4'-difluorodiphenylsulfone and combination thereof.

In the present invention, there is no special limitation to the amount ratio of the diol component and the dihalogenated sulfone compound used in preparing the polysulfone copolymer. Based on 100 moles of the total diol component, amount of the used dihalogenated sulfone compound may be preferably 50 moles to 300 moles; and more preferably 80 moles to 150 moles. If the amount of the used dihalogenated sulfone compound is too little or too much as compared with the amount of the total diol component used in preparing the polysulfone copolymer, the reaction between the diol component and the dihalogenated sulfone compound is not conducted properly, and thus it may be difficult to obtain the desired molecular weight.

In addition, dihalogenated compound other than the dihalogenated sulfone compound may be further used. Preferably, based on 100 parts by weight of the dihalogenated sulfone compound, 1 to 50 parts by weight of the dihalogenated compound other than the dihalogenated sulfone compound may be used. As such dihalogenated compound other than the dihalogenated sulfone compound, 1,4-dichlorobenzene, 1,4-difluorobenzene, bis(4-chlorophenyl)sulfide, di(4-fluorophenyl)sulfide or combination thereof may be used.

According to some embodiments of the present invention, although it is not especially limited thereto, the polysulfone copolymer of the present invention may comprise a structure represented by one of the following formulas 3 to 6 (wherein the part indicated by [] represents repeat unit):

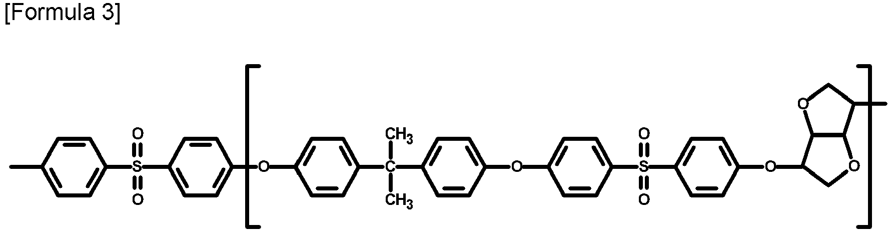

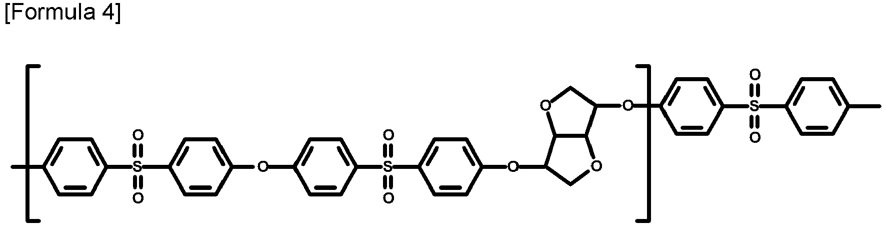

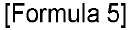

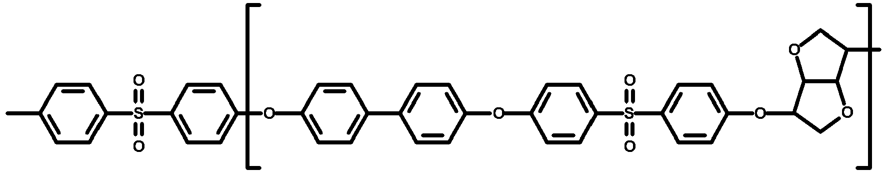

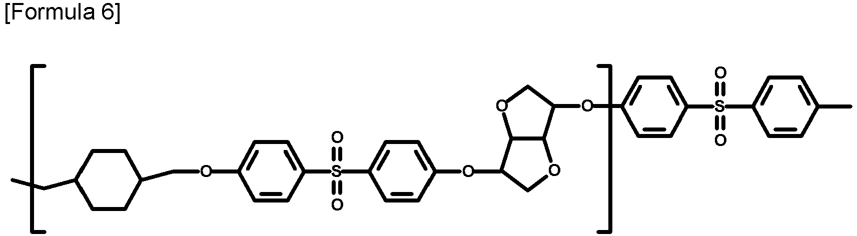

According to the other aspect of the present invention, provided is a method for preparing a polysulfone copolymer, comprising the steps of: (1) polymerizing diol component comprising anhydrosugar alcohol and a diol compound other than the anhydrosugar alcohol, and dihalogenated sulfone compound in the presence of alkali metal salt catalyst; (2) diluting the polymerization reaction product and removing halogenated product of alkali metal therefrom; and (3) precipitating the diluted polymerization reaction product and washing it.

The alkali metal salt catalyst may be preferably selected from the group consisting of potassium carbonate, sodium carbonate, sodium hydroxide, potassium hydroxide and mixtures thereof. There is no special limitation to the amount of catalyst used. However, if the amount of the used catalyst is too little, the reaction rate becomes slow, and if the amount of the used catalyst is too much, the residual catalyst may change the color of the product or the properties thereof may deteriorate. According to an embodiment of the present invention, for example, based on 100 moles of the diol component, the catalyst may be used in an amount of 80 to 300 moles, and more preferably, 100 to 130 moles.

The above polymerization reaction may be conducted, for example, at a temperature of 160 to 200°C under atmospheric pressure for 5 to 10 hours in a reaction solvent such as N-methyl-2-pyrrolidone (NMP), dimethyl sulfoxide (DMSO), dimethyl acetamide (DMAc), dimethyl formamide (DMF), sulfolane, diphenyl sulfone (DPS), dimethyl sulfone (DMS), etc. a cosolvent such as chlorobenzene, tetrahydrofuran (THF), etc. or a solvent mixture thereof, but it is not limited thereto. After the polymerization is completed, the polysulfone copolymer of the present invention may be prepared by diluting the polymerization reaction product (wherein the dilution solvent may be the same as the polymerization reaction solvent) and from the diluted polymerization reaction product, removing halogenated product of alkali metal (salt of alkali metal from the alkali metal salt catalyst and halogen from the dihalogenated sulfone compound, for example, KCI) generated during the reaction by, for example, filtration through celite filter, or a decanter or a centrifuge using specific gravity difference; and precipitating the diluted and filtered polymerization reaction product in a solvent (for example, alcohol such as methanol, or water) and washing it with water or the like.

Since the polysulfone copolymer of the present invention as explained above comprises sulfone-based compound and anhydrosugar alcohol which is a biogenic material as repeat units, it can solve the problem of exhaustion of petroleum resources which are limited resources; does not emit carbon dioxide when disposed after use, and thus is environmentally friendly; and has significantly improved heat resistance and chemical resistance as compared with conventional polysulfone copolymers, and thus can be used very suitably for resin processed articles such as membranes, etc.

Therefore, according to another aspect of the present invention, a molded product, preferably a membrane, manufactured by using the polysulfone copolymer of the present invention is provided. As the molding process, solution spinning, casting (coating), extrusion, injection, etc. may be used, but it is not limited thereto. The field of application of the membrane provided according to the present invention may include R/O membrane for water treatment, electrolyte membrane for fuel cells, dialysis membrane for blood in medical use, electric/electronic connector, automobile parts, etc., but it is not limited thereto.

There is no special limitation in manufacturing a molded product such as membrane, etc. by using the polysulfone copolymer of the present invention, and any method generally used in manufacture of resin molded articles may be used as itself, or with proper modification.

The present invention is explained in more detail through the following Examples and Comparative Examples. However, the scope of the present invention is not limited thereby.

### [EXAMPLES] Preparation of polysulfone copolymer

### Reference Example 1

Into a 3-necked 1L flask equipped with an agitator, a thermometer and a condenser, isosorbide (ISB, 0.05 mole), 4,4'-dichlorodiphenyl sulfone (DCDPS, 1.0 mole), bisphenol A (BPA, 0.95 mole), potassium carbonate (1.1 mole), N-methyl-2-pyrrolidone (NMP, 10.1 mole) and chlorobenzene (1.11 mole) were fed. Under nitrogen purge, the reaction mixture was heated rapidly to the reaction temperature (160°C), and it could be confirmed that chlorobenzene added as cosolvent effused the reaction byproduct H₂O azeotropically as the reaction time elapsed. After the reaction for 9 hours at the temperature of 192°C, the final reaction mixture changed to dark brown color, and the viscosity of the reaction mixture could be confirmed with the naked eye.

After cooling the final reaction mixture at room temperature, it was diluted with the preliminarily prepared solvent NMP. After filtering the diluted reaction mixture through celite, it was precipitated in methanol. After washing the precipitated product with distilled water and filtering, it was dried to obtain a polysulfone copolymer containing isosorbide (ISB).

### Reference Example 2

Other than the fact that isosorbide (ISB, 0.1 mole), 4,4'-dichlorodiphenyl sulfone (DCDPS, 1.0 mole), bisphenol A (BPA, 0.9 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB) (10 mole%).

### Reference Example 3

Other than the fact that isosorbide (ISB, 0.2 mole), 4,4'-dichlorodiphenyl sulfone (DCDPS, 1.0 mole), bisphenol A (BPA, 0.8 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB) (20 mole%).

### Reference Example 4

Other than the fact that isosorbide (ISB, 0.4 mole), 4,4'-dichlorodiphenyl sulfone (DCDPS, 1.0 mole), bisphenol A (BPA, 0.6 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB) (40 mole%).

### Reference Example 5

Other than the fact that isosorbide (ISB, 0.5 mole), 4,4'-dichlorodiphenyl sulfone (DCDPS, 1.0 mole), bisphenol A (BPA, 0.5 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB) (50 mole%).

### Reference Example 6

Other than the fact that isosorbide (ISB, 0.7 mole), 4,4'-dichlorodiphenyl sulfone (DCDPS, 1.0 mole), bisphenol A (BPA, 0.3 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB) (70 mole%).

### Example 7

Other than the fact that isosorbide (ISB, 0.8 mole), 4,4'-dichlorodiphenyl sulfone (DCDPS, 1.0 mole), 1,4-cyclohexanedimethanol (CHDM, 0.2 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB).

### Example 8

Other than the fact that isosorbide (ISB, 0.2 mole), 4,4'-dichlorodiphenyl sulfone (DCDPS, 1.0 mole), 4,4'-dihydroxydiphenyl sulfone (DHDPS, 0.8 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB).

### Example 9

Other than the fact that isosorbide (ISB, 0.3 mole), 4,4'-dichlorodiphenyl sulfone (DCDPS, 1.0 mole), 4,4'-dihydroxydiphenyl sulfone (DHDPS, 0.4 mole), 1,4-cyclohexanedimethanol (CHDM, 0.3 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB).

### Example 10

Other than the fact that isosorbide (ISB, 0.2 mole), 4,4'-dichlorodiphenyl sulfone (DCDPS, 1.0 mole), 4,4'-biphenol (Biphenol, 0.8 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB).

### Example 11

Other than the fact that isosorbide (ISB, 0.3 mole), 4,4'-dichlorodiphenyl sulfone (DCDPS, 1.0 mole), 4,4'-biphenol (Biphenol, 0.4 mole), 1,4-cyclohexanedimethanol (CHDM, 0.3 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer containing isosorbide (ISB).

**[Table 1] (Molar ratios of the raw materials)**

| | BPA | ISB | DCDPS | NMP | Potassium carbonate | Chlorobenzene |
|---|---|---|---|---|---|---|
| Reference Example 1 | 0.95 | 0.05 | 1.0 | 10.1 | 1.1 | 1.11 |
| Reference Example 2 | 0.9 | 0.1 | 1.0 | 10.1 | 1.1 | 1.11 |
| Reference Example 3 | 0.8 | 0.2 | 1.0 | 10.1 | 1.1 | 1.11 |
| Reference Example 4 | 0.6 | 0.4 | 1.0 | 10.1 | 1.1 | 1.11 |
| Reference Example 5 | 0.5 | 0.5 | 1.0 | 10.1 | 1.1 | 1.11 |
| Reference Example 6 | 0.3 | 0.7 | 1.0 | 10.1 | 1.1 | 1.11 |

**[Table 2] (Molar ratios of the raw materials)**

| | ISB | CHDM | DHDPS | DCDPS | NMP | Potassium carbonate | Chlorobenzene |
|---|---|---|---|---|---|---|---|
| Example 7 | 0.8 | 0.2 | 0 | 1.0 | 10.1 | 1.1 | 1.11 |
| Example 8 | 0.2 | 0 | 0.8 | 1.0 | 10.1 | 1.1 | 1.11 |
| Example 9 | 0.3 | 0.3 | 0.4 | 1.0 | 10.1 | 1.1 | 1.11 |

**[Table 3] (Molar ratios of the raw materials)**

| | ISB | CHDM | Biphenol | DCDPS | NMP | Potassium carbonate | Chlorobenzene |
|---|---|---|---|---|---|---|---|
| Example 10 | 0.2 | 0 | 0.8 | 1.0 | 10.1 | 1.1 | 1.11 |
| Example 11 | 0.3 | 0.3 | 0.4 | 1.0 | 10.1 | 1.1 | 1.11 |

### Comparative Example 1

Other than the fact that 4,4'-dichlorodiphenyl sulfone (DCDPS, 1.0 mole), bisphenol A (BPA, 1.0 mole), potassium carbonate (1.1 mole), N-methyl-2-pyrrolidone (NMP, 10.1 mole) and chlorobenzene (1.11 mole) were fed into a 3-necked 1L flask equipped with an agitator, a thermometer and a condenser, the same method as Example 1 was carried out to obtain a polysulfone copolymer.

### Comparative Example 2

A PSU product for membrane (SOLVAY3500 manufactured by Solvay)

For each of the copolymers prepared in the above Examples and Comparative Examples, the glass transition temperature (heat resistance), chemical resistance, weight average molecular weight and molecular weight distribution were measured and shown in the following Tables 4 to 6.

### Glass transition temperature (Tg)

The glass transition temperature of the copolymer was measured by using Diamond DSC (Differential Scanning Calorimetry) of Perkin Elmer.
Measurement method: H-C-R (∼ 300°C); 10.00°C/min

### Chemical resistance

1. First, the polysulfone copolymer was completely dissolved in DMAc at 25% concentration.
2. The polymer solution was casted on a support of polypropylene (PP) film in 200µm thickness at the rate of 0.2m/min by using an applicator and the upper portion was exposed to air at 20∼30°C with 30-80% humidity for about 2 minutes, and then subjected to the first desolventization in MeOH solidification bath for 3 minutes. The polysulfone (PSU) film was then peeled off from the PP support. The peeled PSU film was then immersed in H₂O solidification bath and kept therein for about 3 hours for complete desolventization, and then dried at 80°C for 3 hours to obtain a dry PSU film.
3. The completely dried film was cut in 3 cm x 3cm size and immersed in each of 500ml of dimethyl acetamide (DMAc), toluene and tetrahydrofuran (THF), and the degree of dissolution or swelling was observed and evaluated with a 5-point method.

### Weight average molecular weight (Mw) and molecular weight distribution (MWD)

The measurement was made by using Gel Permeation Chromatography (Waters 2690, PL) at the temperature of 40°C and the flow rate of 1ml/min (Standard: polystyrene).

**[Table 4]**

| | Glass transition temperature (Tg) (°C) |
|---|---|
| Reference Example 1 | 191.9 |
| Reference Example 2 | 194.9 |
| Reference Example 3 | 196.5 |
| Reference Example 4 | 204.9 |
| Reference Example 5 | 211.9 |
| Reference Example 6 | 218.3 |
| Example 7 | 230.1 |
| Example 8 | 225.1 |
| Example 9 | 223.4 |
| Example 10 | 224.3 |
| Example 11 | 222.5 |
| Comparative Example 1 | 190 |
| Comparative Example 2 | 189 |

**[Table 5]**

| | DMAc | Toluene | THF |
|---|---|---|---|
| Reference Example 1 | 5 | 4 | 4 |
| Reference Example 2 | 5 | 3 | 3 |
| Reference Example 3 | 4 | 1 | 3 |
| Reference Example 4 | 4 | 1 | 2 |
| Reference Example 5 | 4 | 1 | 2 |
| Reference Example 6 | 4 | 1 | 2 |
| Example 7 | 1 | 1 | 1 |
| Example 8 | 1 | 1 | 1 |
| Example 9 | 1 | 1 | 1 |
| Example 10 | 1 | 1 | 1 |
| Example 11 | 1 | 1 | 1 |
| Comparative Example 1 | 5 | 5 | 5 |
| Comparative Example 2 | 5 | 5 | 5 |
| 5: Very well dissolved, 4: Well dissolved, 3: Poorly dissolved, 2 : Swollen, 1 : Undissolved | | | |

**[Table 6]**

| | Weight average molecular weight (Mw) | Molecular weight distribution (MWD) |
|---|---|---|
| Reference Example 1 | 52,000 | 3.5 |
| Reference Example 2 | 53,000 | 3.6 |
| Reference Example 3 | 57,000 | 3.8 |
| Reference Example 4 | 51,000 | 3.4 |
| Reference Example 5 | 50,000 | 3.4 |
| Reference Example 6 | 47,000 | 3.2 |
| Example 7 | 43,000 | 3.0 |
| Example 8 | 45,000 | 3.1 |
| Example 9 | 48,000 | 3.3 |
| Example 10 | 46,000 | 3.2 |
| Example 11 | 47,000 | 3.2 |
| Comparative Example 1 | 55,000 ∼ 65,000 | 3.2 ∼ 3.8 |
| Comparative Example 2 | 50,000 ∼ 60,000 | 3.8 ∼ 4.2 |

From Tables 4 to 6 above, it can be known that, as compared with Comparative Examples 1 and 2 having similar weight average molecular weight and molecular weight distribution, the polysulfone copolymer of the present invention showed good heat resistance indicated by the increase of glass transition temperature (Tg) as the ISB content increased, and good chemical resistance in the experiments with DMAc, toluene and THF solvents. Therefore, as compared with the conventional polysulfone copolymers of Comparative Examples, the polysulfone copolymer of the present invention has significantly improved heat resistance and chemical resistance, and thus can be suitably used for molded resin articles such as membranes, etc. In addition, since the polysulfone copolymer of the present invention comprises anhydrosugar alcohol which is a biogenic material, it can solve the problem of exhaustion of petroleum resources which are limited resource, and it does not emit carbon dioxide when disposed after use, and thus is environmentally friendly.

## Claims

1. A polysulfone copolymer comprising:
repeat units derived from a diol component comprising an anhydrosugar alcohol and a diol compound other than the anhydrosugar alcohol; and
repeat units derived from a dihalogenated sulfone compound;
wherein the diol component comprises, based on 100 mol% of the total diol component, 5 to 80 mol% of the anhydrosugar alcohol, and 95 to 20 mol% of the diol compound other than the anhydrosugar alcohol
wherein the diol compound other than the anhydrosugar alcohol is aromatic diol, alicyclic diol, aliphatic diol or mixture thereof; and
wherein
the aromatic diol is selected from the group consisting of 4,4'-dihydroxy-diphenyl sulfone, 4,4'-biphenol, hydroquinone, 4,4'-dihydroxy-diphenylether, 3-(4-hydroxyphenoxy)phenol, bis(4-hydroxyphenyl)sulfide and combinations thereof,
the alicyclic diol is selected from the group consisting of 1,4-cyclohexanedimethanol, 1,3-cyclohexanedimethanol, 1,2-cyclohexanedimethanol, tricyclodecanedimethanol, adamantanediol, pentacyclopentadecanedimethanol and combinations thereof, and
the aliphatic diol is selected from the group consisting of ethyleneglycol, 1,3-propanediol, 1,2-propanediol, 1,4-butanediol, 1,3-butanediol, 1,2-butanediol, 1,5-heptanediol, 1,6-hexanediol, and combinations thereof.

2. The polysulfone copolymer according to claim 1, wherein the anhydrosugar alcohol is selected from the group consisting of isosorbide, isomannide, isoidide and mixtures thereof.

3. The polysulfone copolymer according to claim 1, wherein the dihalogenated sulfone compound is selected from the group consisting of 4,4'-dichlorodiphenylsulfone, 4,4'-difluorodiphenylsulfone and combination thereof.

4. A method for preparing a polysulfone copolymer, comprising the steps of:
(1) polymerizing a diol component comprising an anhydrosugar alcohol and a diol compound other than the anhydrosugar alcohol, and a dihalogenated sulfone compound in the presence of alkali metal salt catalyst;
wherein the diol component comprises, based on 100 mol% of the total diol component, 5 to 80 mol% of the anhydrosugar alcohol, and 95 to 20 mol% of the diol compound other than the anhydrosugar alcohol;
wherein the diol compound other than the anhydrosugar alcohol is aromatic diol, alicyclic diol, aliphatic diol or mixture thereof; and
wherein
the aromatic diol is selected from the group consisting of 4,4'-dihydroxy-diphenyl sulfone, 4,4'-biphenol, hydroquinone, 4,4'-dihydroxy-diphenylether, 3-(4-hydroxyphenoxy)phenol, bis(4-hydroxyphenyl)sulfide and combinations thereof,
the alicyclic diol is selected from the group consisting of 1,4-cyclohexanedimethanol, 1,3-cyclohexanedimethanol, 1,2-cyclohexanedimethanol, tricyclodecanedimethanol, adamantanediol, pentacyclopentadecanedimethanol and combinations thereof, and
the aliphatic diol is selected from the group consisting of ethyleneglycol, 1,3-propanediol, 1,2-propanediol, 1,4-butanediol, 1,3-butanediol, 1,2-butanediol, 1,5-heptanediol, 1,6-hexanediol, and combinations thereof;
(2) diluting the polymerization reaction product and removing the halogenated product of alkali metal therefrom; and
(3) precipitating the diluted polymerization reaction product and washing it.

5. The method for preparing a polysulfone copolymer according to claim 4, wherein the alkali metal salt catalyst is selected from the group consisting of potassium carbonate, sodium carbonate, sodium hydroxide, potassium hydroxide and mixtures thereof.

6. A molded product manufactured by using the polysulfone copolymer of any of claims 1 to 3.

7. The molded product according to claim 6, which is a membrane.

## Patentansprüche

1. Ein Polysulfon-Copolymer, umfassend:
sich wiederholende Einheiten, die von einer Diolkomponente abgeleitet sind, die einen Anhydrozuckeralkohol und eine andere Diolverbindung als den Anhydrozuckeralkohol umfaßt; und
sich wiederholende Einheiten, abgeleitet von einer dihalogenierten Sulfonverbindung;
wobei die Diolkomponente, bezogen auf 100 Mol-% der gesamten Diolkomponente, 5 bis 80 Mol-% des Anhydrozuckeralkohols und 95 bis 20 Mol-% der von dem Anhydrozuckeralkohol verschiedenen Diolverbindung umfasst
wobei die Diolverbindung, die nicht der Anhydrozuckeralkohol ist, ein aromatisches Diol, ein alicyclisches Diol, ein aliphatisches Diol oder eine Mischung davon ist; und
wobei
das aromatische Diol ausgewählt ist aus der Gruppe bestehend aus 4,4'-Dihydroxydiphenylsulfon, 4,4'-Biphenol, Hydrochinon, 4,4'-Dihydroxy-diphenylether, 3-(4-Hydroxyphenoxy)phenol, Bis(4-hydroxyphenyl)sulfid und Kombinationen davon,
das alicyclische Diol ausgewählt ist aus der Gruppe bestehend aus 1,4-Cyclohexandimethanol, 1,3-Cyclohexandimethanol, 1,2-Cyclohexandimethanol, Tricyclodecandimethanol, Adamantandiol, Pentacyclopentadecandimethanol und Kombinationen davon, und
das aliphatische Diol ausgewählt ist aus der Gruppe bestehend aus Ethylenglykol, 1,3-Propandiol, 1,2-Propandiol, 1,4-Butandiol, 1,3-Butandiol, 1,2-Butandiol, 1,5-Heptandiol, 1,6-Hexandiol und Kombinationen davon.

2. Polysulfon-Copolymer nach Anspruch 1, wobei der Anhydrozuckeralkohol ausgewählt ist aus der Gruppe bestehend aus Isosorbid, Isomannid, Isoidid und Mischungen davon.

3. Polysulfon-Copolymer nach Anspruch 1, wobei die dihalogenierte Sulfonverbindung ausgewählt ist aus der Gruppe bestehend aus 4,4'-Dichlordiphenylsulfon, 4,4'-Difluordiphenylsulfon und einer Kombination davon.

4. Verfahren zur Herstellung eines Polysulfon-Copolymers, umfassend die folgenden Schritte:
(1) Polymerisieren einer Diolkomponente, umfassend einen Anhydrozuckeralkohol und einer Diolverbindung, die nicht der Anhydrozuckeralkohol ist, und einer dihalogenierten Sulfonverbindung in Gegenwart eines Alkalimetallsalzkatalysators;
wobei die Diolkomponente, bezogen auf 100 Mol-% der gesamten Diolkomponente, 5 bis 80 Mol-% des Anhydrozuckeralkohols und 95 bis 20 Mol-% der von dem Anhydrozuckeralkohol verschiedenen Diolverbindung umfasst;
wobei die Diolverbindung, die nicht der Anhydrozuckeralkohol ist, ein aromatisches Diol, ein alicyclisches Diol, ein aliphatisches Diol oder eine Mischung davon ist; und wobei
das aromatische Diol ausgewählt ist aus der Gruppe bestehend aus 4,4'-Dihydroxydiphenylsulfon, 4,4'-Biphenol, Hydrochinon, 4,4'-Dihydroxy-diphenylether, 3-(4-Hydroxyphenoxy)phenol, Bis(4-hydroxyphenyl)sulfid und Kombinationen davon,
das alicyclische Diol ausgewählt ist aus der Gruppe bestehend aus 1,4-Cyclohexandimethanol, 1,3-Cyclohexandimethanol, 1,2-Cyclohexandimethanol, Tricyclodecandimethanol, Adamantandiol, Pentacyclopentadecandimethanol und Kombinationen davon, und
das aliphatische Diol ausgewählt ist aus der Gruppe bestehend aus Ethylenglykol, 1,3-Propandiol, 1,2-Propandiol, 1,4-Butandiol, 1,3-Butandiol, 1,2-Butandiol, 1,5-Heptandiol, 1,6-Hexandiol und Kombinationen davon;
(2) Verdünnen des Polymerisationsreaktionsprodukts und Entfernen des halogenierten Alkaliprodukts daraus; und
(3) Ausfällen des verdünnten Polymerisationsreaktionsprodukts und Waschen desselben.

5. Verfahren zur Herstellung eines Polysulfon-Copolymers nach Anspruch 4, wobei der Alkalimetallsalz-Katalysator ausgewählt ist aus der Gruppe bestehend aus Kaliumcarbonat, Natriumcarbonat, Natriumhydroxid, Kaliumhydroxid und Mischungen davon.

6. Geformtes Produkt, hergestellt unter Verwendung des Polysulfon-Copolymers nach einem der Ansprüche 1 bis 3.

7. Das geformte Produkt nach Anspruch 6, das eine Membran ist.

## Revendications

1. Un copolymère de polysulfone comprenant :
des unités répétées dérivées d'un composant diol comprenant un alcool anhydro-sucré et un composé diol autre que l'alcool anhydro-sucré ; et
des unités répétitives dérivées d'un composé sulfone dihalogéné;
dans lequel le composant diol comprend, sur la base de 100 % en moles du composant diol total, 5 à 80 % en moles de l'alcool anhydro-sucré et 95 à 20 % en moles du composé diol autre que l'alcool anhydro-sucré
dans lequel le composé diol autre que l'alcool anhydro-sucré est un diol aromatique, un diol alicyclique, un diol aliphatique ou un mélange de ceux-ci ; et
dans lequel
le diol aromatique est choisi dans le groupe constitué par la 4,4'-dihydroxy-diphénylsulfone, le 4,4'-biphénol, l'hydroquinone, le 4,4'-dihydroxy-diphényléther, le 3-(4-hydroxyphénoxy)phénol, le bis(4-hydroxyphényl)sulfure et combinaisons de ceux-ci,
le diol alicyclique est choisi dans le groupe constitué par le 1,4-cyclohexanediméthanol, le 1,3-cyclohexanediméthanol, le 1,2-cyclohexanediméthanol, le tricyclodécanediméthanol, l'adamantanediol, le pentacyclopentadécanediméthanol et combinaisons de ceux-ci, et
le diol aliphatique est choisi dans le groupe constitué par l'éthylèneglycol, le 1,3-propanediol, le 1,2-propanediol, le 1,4-butanediol, le 1,3-butanediol, le 1,2-butanediol, le 1,5-heptanediol, le 1,6-hexanediol et combinaisons de ceux-ci.

2. Copolymère de polysulfone selon la revendication 1, dans lequel l'alcool anhydre est choisi dans le groupe constitué par l'isosorbide, l'isomannide, l'isoidide et leurs mélanges.

3. Copolymère de polysulfone selon la revendication 1, dans lequel le composé sulfone dihalogéné est choisi dans le groupe constitué par la 4,4'-dichlorodiphénylsulfone, la 4,4'-difluorodiphénylsulfone et leur combinaison.

4. Procédé de préparation d'un copolymère de polysulfone, comprenant les étapes suivantes
(1) la polymérisation d'un composant diol comprenant un alcool anhydro-sucré et un composé diol autre que l'alcool anhydro-sucré, et un composé sulfone dihalogéné en présence d'un catalyseur à base de sel de métal alcalin ;
dans lequel le composant diol comprend, sur la base de 100 % en moles du composant diol total, 5 à 80 % en moles de l'alcool anhydro-sucré, et 95 à 20 % en moles du composé diol autre que l'alcool anhydro-sucré ;
dans lequel le composé diol autre que l'alcool anhydro-sucré est un diol aromatique, un diol alicyclique, un diol aliphatique ou un mélange de ceux-ci ; et
où
le diol aromatique est choisi dans le groupe constitué par la 4,4'-dihydroxy-diphénylsulfone, le 4,4'-biphénol, l'hydroquinone, le 4,4'-dihydroxy-diphényléther, le 3-(4-hydroxyphénoxy)phénol, le bis(4-hydroxyphényl)sulfure et combinaisons de ceux-ci,
le diol alicyclique est choisi dans le groupe constitué par le 1,4-cyclohexanediméthanol, le 1,3-cyclohexanediméthanol, le 1,2-cyclohexanediméthanol, le tricyclodécanediméthanol, l'adamantanediol, le pentacyclopentadécanediméthanol et combinaisons de ceux-ci, et
le diol aliphatique est choisi dans le groupe constitué par l'éthylèneglycol, le 1,3-propanediol, le 1,2-propanediol, le 1,4-butanediol, le 1,3-butanediol, le 1,2-butanediol, le 1,5-heptanediol, le 1,6-hexanediol et combinaisons de ceux-ci ;
(2) diluer le produit de la réaction de polymérisation et en éliminer le produit halogéné du métal alcalin ; et
(3) la précipitation du produit dilué de la réaction de polymérisation et son lavage.

5. Procédé de préparation d'un copolymère de polysulfone selon la revendication 4, dans lequel le catalyseur à base de sel de métal alcalin est choisi dans le groupe constitué par le carbonate de potassium, le carbonate de sodium, l'hydroxyde de sodium, l'hydroxyde de potassium et mélanges de ceux-ci.

6. Produit moulé fabriqué en utilisant le copolymère de polysulfone de l'une des revendications 1 à 3.

7. Le produit moulé selon la revendication 6, qui est une membrane.
